# EUROPEAN PATENT APPLICATION

(11) **EP 4 815 137 A1**
(43) Date of publication of application: **30.09.2026**
(21) Application number: 26163679.9
(22) Date of filing: 10.03.2026
(51) Int. Cl.: H01M 50/213, H01M 50/383, H01M 50/204, H01M 50/271, H01M 50/293, A62C 3/16

(54) **BATTERY PACK**

(30) Priority: 28.03.2025 KR 20250040711
(71) Applicant: SAMSUNG SDI CO., LTD., Yongin-si, Gyeonggi-do 17084 (KR)
(72) Inventor: HWANG, Ho Ryong, Suwon-si, Gyeonggi-do 16678 (KR)
(74) Representative: Marks & Clerk LLP

(57) **Abstract**

A battery pack includes a housing (100), a plurality of battery cells (200) accommodated in the housing, a fire extinguishing member (300) facing the battery cells, and a support member (400) extending from the housing and configured to support the fire extinguishing member.

## Description

### BACKGROUND

### 1. Field

The present disclosure relates to a battery pack.

### 2. Discussion of Related Art

Generally, secondary batteries are batteries that can be charged and discharged, unlike primary batteries that cannot be recharged. Low-capacity secondary batteries may be used in portable small electronic devices, such as smartphones, feature phones, laptop computers, digital cameras, and camcorders, while high-capacity secondary batteries are widely used as power sources for driving motors in hybrid vehicles, electric vehicles, and the like, batteries for power storage, and the like. These secondary batteries include an electrode assembly composed of a positive electrode and a negative electrode, a case which accommodates the electrode assembly, an electrode terminal connected to the electrode assembly, and the like.

Secondary batteries may be used in battery packs formed of a plurality of unit battery cells connected in series and/or parallel to provide high energy density. The battery packs may be formed by connecting electrode terminals of a plurality of unit batteries to each other to provide the required amount of power, and to implement, for example, high-power secondary batteries for electric vehicles.

The above-described information disclosed in the background technology of this invention is provided to improve understanding of the background of the present disclosure and may include information that does not constitute related or prior art.

### SUMMARY

According to an aspect of embodiments of the present disclosure, a battery pack that is capable of extinguishing a fire caused by thermal runaway of a battery cell is provided.

However, aspects and technical problems to be solved by the present disclosure are not limited to the aspects and problems to be solved described above, and other aspects and problems to be solved not mentioned may be clearly understood by those skilled in the art from the description of the invention described below.

According to an aspect of the present disclosure, a battery pack includes: a housing; a plurality of battery cells accommodated in the housing; a fire extinguishing member facing the plurality of battery cells; and a support member extending from the housing and configured to support the fire extinguishing member.

Each of the plurality of battery cells may include: an electrode assembly; a case accommodating or configured to accommodate the electrode assembly and including an opening and a closed portion; and a cap assembly facing the closed portion and sealing the opening, and the fire extinguishing member may include a fire extinguishing sheet including a first surface facing the housing and a second surface facing the cap assembly.

An area of the fire extinguishing sheet may be greater than a cross-sectional area of a battery cell of the plurality of battery cells.

The support member may include: a first support member configured to support a first side of the fire extinguishing sheet; and a second support member spaced apart from the first support member and configured to support a second side of the fire extinguishing sheet.

The housing may include a first housing body and a second housing body facing each other in a first direction, and the closed portion and the cap assembly may face each other in a second direction intersecting the first direction.

The cap assembly may face the second direction.

The cap assemblies of some battery cells among the plurality of battery cells may face the second direction, and the cap assemblies of remaining battery cells among the plurality of battery cells may be face a direction opposite to the second direction.

The first support member may extend from the first housing body, and the second support member may extend from the second housing body.

The first support member may include: a first support body protruding from the first housing body and surrounding a side of the fire extinguishing sheet; and a plurality of first fixed ribs that each extend from the first support body and contact the second surface of the fire extinguishing sheet.

A side of the fire extinguishing sheet may be inserted between the first housing body and a first fixed rib of the plurality of first fixed ribs.

An area of each of the first fixed ribs may be smaller than an area of the second surface.

An interval between neighboring first fixed ribs of the plurality of first fixed ribs may be greater than a width of each of the first fixed ribs.

A thickness of each of the first fixed ribs may decrease toward an end portion thereof.

The first support member may further include a plurality of first pressing ribs that protrude from the first housing body and contact the first surface of the fire extinguishing sheet.

The second support member may include: a second support body protruding from the second housing body and surrounding another side of the fire extinguishing sheet; and a plurality of second fixed ribs that each extend from the second support body and contact the second surface of the fire extinguishing sheet.

The second support member may further include a second pressing rib that protrudes from the second housing body and contacts the first surface of the fire extinguishing sheet.

The housing may include a first housing body and a second housing body which face each other in a first direction, and the closed portion and the cap assembly may face each other in the first direction.

The cap assembly may face the first housing body, and the first support member and the second support member may extend from the first housing body.

The cap assembly may include: a cap up facing the electrode assembly and having a cap up hole; a cap down between the cap up and the electrode assembly and connected to the electrode assembly; and a vent plate between the cap up and the cap down.

Each of the plurality of battery cells may further include a terminal passing through the closed portion of the case, and the cap assembly may include: a cap plate; and a notch extending concavely inward in the cap plate.

At least some of the above and other features of the invention are set out in the claims.

### BRIEF DESCRIPTION OF THE DRAWINGS

The following drawings attached to the present specification illustrate some embodiments of the present disclosure and further describe aspects and features of the present disclosure together with the detailed description of the present disclosure. However, the present disclosure is not be construed as being limited to the drawings, in which:
FIG. 1 is an exploded perspective view schematically showing a configuration of a battery pack according to an embodiment of the present disclosure;
FIG. 2 is a cross-sectional view schematically showing the configuration of the battery pack of FIG. 1;
FIG. 3 is a perspective view schematically showing a configuration of a battery cell according to an embodiment of the present disclosure;
FIG. 4 is a cross-sectional view schematically showing the configuration of the battery cell of FIG. 3;
FIG. 5 is a plan view schematically showing a configuration of a fire extinguishing member according to an embodiment of the present disclosure;
FIG. 6 is a cross-sectional view schematically showing the configuration of the fire extinguishing member of FIG. 5;
FIG. 7 is a plan view schematically showing a configuration of a support member according to an embodiment of the present disclosure;
FIG. 8 is an enlarged view schematically showing a configuration of a first support member according to an embodiment of the present disclosure;
FIG. 9 is an enlarged view schematically showing a configuration of a second support member according to an embodiment of the present disclosure;
FIG. 10 is an exploded perspective view schematically showing a configuration of a battery pack according to another embodiment of the present disclosure;
FIG. 11 is a cross-sectional view schematically showing the configuration of the battery pack of FIG. 10;
FIG. 12 is a cross-sectional view schematically showing a configuration of a battery pack according to another embodiment of the present disclosure;
FIG. 13 is an enlarged view schematically showing a configuration of a first support member and a second support member according to an embodiment of the present disclosure;
FIG. 14 is a cross-sectional view schematically showing a configuration of a battery pack according to another embodiment of the present disclosure;
FIG. 15 is a perspective view schematically showing a configuration of a battery cell according another embodiment of the present disclosure; and
FIG. 16 is a cross-sectional view schematically showing the configuration of the battery cell of FIG. 15.

### DETAILED DESCRIPTION

Herein, some example embodiments of the present disclosure will be described in further detail with reference to the attached drawings. However, terms or words used in this specification and claims are not to be interpreted as being limited to ordinary or dictionary meanings and are to be interpreted as having meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some of the embodiments of the invention and do not necessarily represent all of the technical ideas of the invention, and that there may be various equivalents and modifications that may replace them at the time of filing.

Further, when used herein, the terms "comprise" or "include" and/or "comprising" or "including" specify the presence of the mentioned shapes, numbers, steps, operations, members, elements, and/or groups thereof, but are not intended to exclude the presence or addition of one or more other shapes, numbers, operations, members, elements, and/or groups thereof.

In addition, to facilitate understanding of the invention, the accompanying drawings may not be drawn to actual scale, and the dimensions of some components may be exaggerated. In addition, the same reference numbers may be assigned to the same components in different embodiments.

The statement that two objects for comparison are "equal" or "the same" means equal, the same, or substantially the same. Therefore, "equal," "the same," or "substantially the same" may include deviations that are considered low in the art, for example, deviations of less than 5%. Additionally, uniformity of a parameter over a given region may imply uniformity from an average perspective.

Although "first," "second," and the like may be used to describe various components, the components are not limited by these terms. These terms are used to distinguish one component from another, and, unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" in another component, the above components may be directly connected or coupled to each other, but it should be understood that one or more other components may be interposed between each component, or each component may be "connected," "coupled," or "linked" through another component.

As used herein, the term "and/or" includes any and all combinations of one or more of the associated listed items. Further, the use of "may" when describing embodiments of the present disclosure relates to "one or more embodiments of the present disclosure." Equations such as "one or more" and "one or more" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Thus, the term "below" may encompass both an orientation of above and below.

The terms used in the present specification are intended to describe the embodiments of the present disclosure, and are not intended to limit the present disclosure.

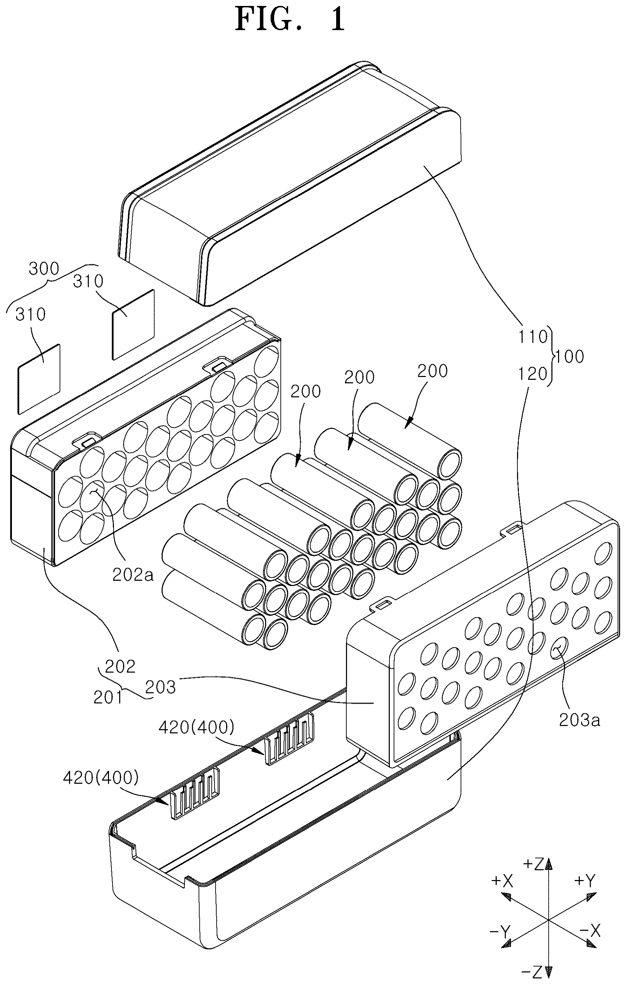

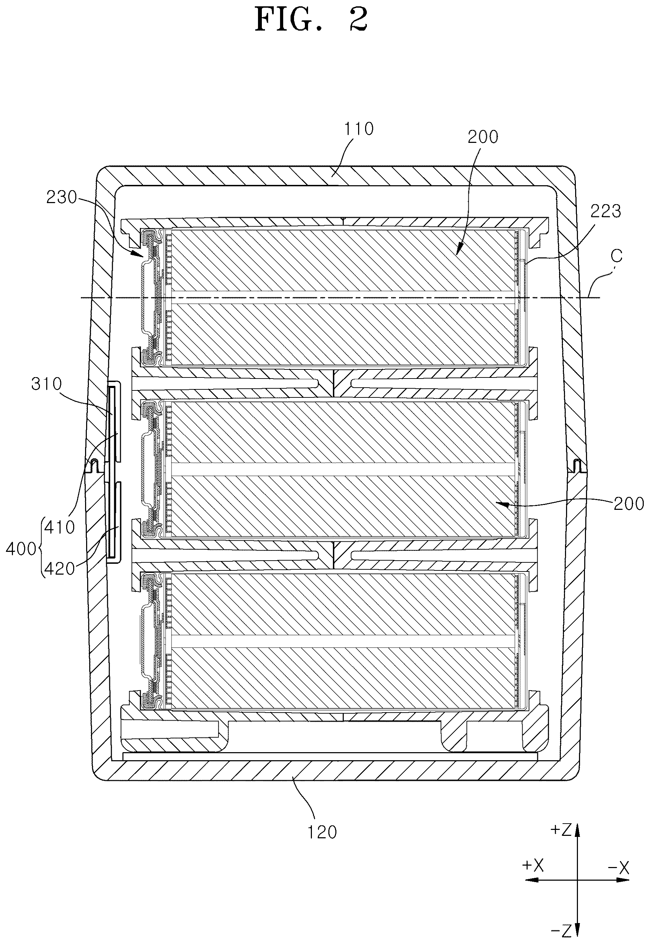

FIG. 1 is an exploded perspective view schematically showing a configuration of a battery pack according to an embodiment of the present disclosure; and FIG. 2 is a cross-sectional view schematically showing the configuration of the battery pack of FIG. 1.

In the following description, for convenience of description, a +Z direction may be used interchangeably with an upward direction or a first direction, a +X direction may be used interchangeably with a leftward direction or a second direction, and a +Y direction may be used interchangeably with a rearward direction or a third direction based on the views in FIGS. 1 and 2.

Referring to FIGS. 1 and 2, the battery pack according to the embodiment of the present disclosure may include a housing 100, a plurality of battery cells 200, a fire extinguishing member 300, and a support member 400.

The housing 100 may accommodate the battery cells 200, the fire extinguishing member 300, the support member 400, and other electrical components therein. An outer surface of the housing 100 may form an exterior of the battery pack and may be exposed to an external environment. An inner surface of the housing 100 may be disposed to surround (e.g., completely surround) an internal space in which the battery cells 200, the fire extinguishing member 300, the support member 400, and other electrical components are accommodated.

The housing 100 according to the illustrated embodiment may include a first housing body 110 and a second housing body 120.

The first housing body 110 and the second housing body 120 may have a box shape in which an inside is hollow and a side is open. A cross-sectional shape of each of the first housing body 110 and the second housing body 120 may be any of various shapes, such as an oval, a circle, a polygon, and the like, as an alternative to the quadrangular shape shown in FIGS. 1 and 2.

The first housing body 110 and the second housing body 120 may be disposed to face each other in the first direction. For example, the second housing body 120 and the first housing body 110 may be sequentially disposed in the first direction. That is, the first housing body 110 may be disposed above the second housing body 120 as shown in FIGS. 1 and 2. However, the first housing body 110 and the second housing body 120 are not limited thereto, and the second housing body 120 may be disposed above the first housing body 110.

The open side of the first housing body 110 and the open side of the second housing body 120 may be disposed to face each other. Edges of the first housing body 110 and the second housing body 120 may be in contact with each other. The first housing body 110 and the second housing body 120 may be coupled to each other by any of various types of coupling methods, such as any of welding, bolting, hook coupling, and fitting. Accordingly, internal spaces of the first housing body 110 and the second housing body 120 may be sealed while being connected to each other.

The battery cells 200 may function as a unit structure that stores and supplies power in the battery pack. The battery cells 200 may be disposed inside the housing 100.

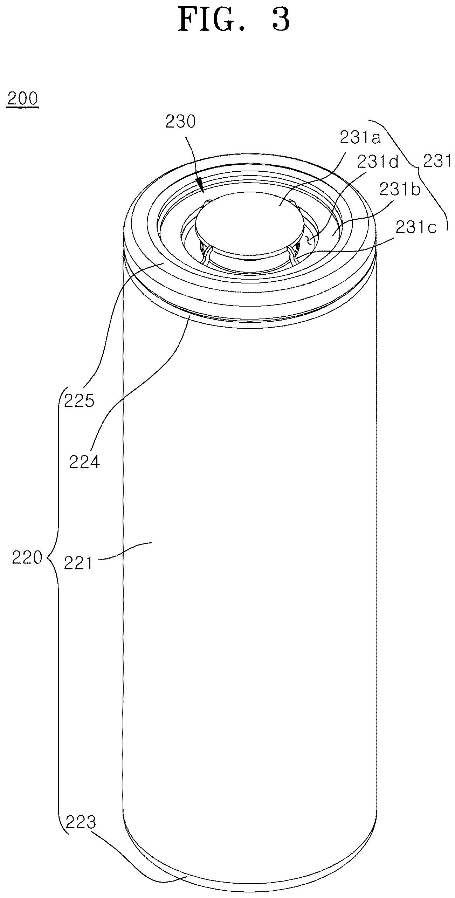

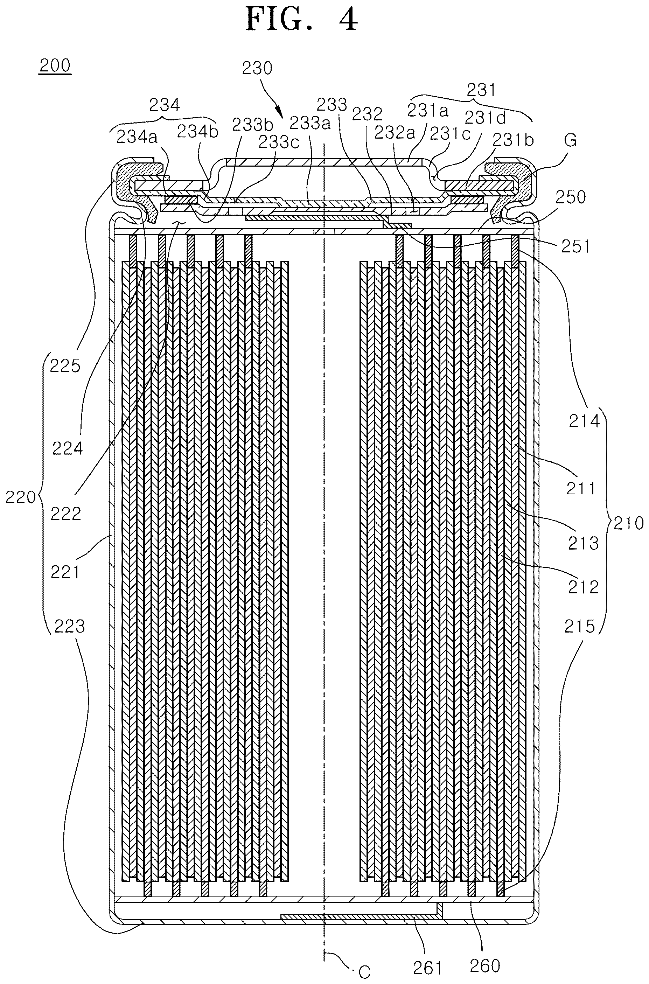

FIG. 3 is a perspective view schematically showing a configuration of a battery cell 200 according to an embodiment of the present disclosure; and FIG. 4 is a cross-sectional view schematically showing the configuration of the battery cell 200 of FIG. 3.

Referring to FIGS. 3 and 4, the battery cell 200 according to the illustrated embodiment includes an electrode assembly 210, a case 220, and a cap assembly 230.

The electrode assembly 210 may function as a unit structure that performs charging and discharging operations of power in the battery cell 200.

The electrode assembly 210 may include a first electrode plate 211, a second electrode plate 212, and a separator 213 located between the first electrode plate 211 and the second electrode plate 212.

In the illustrated embodiment, the electrode assembly 210 may have a wound form centered on a winding axis C.

The electrode assembly 210 may have a form that is wound in a clockwise or counterclockwise direction around the winding axis C in a state in which the first electrode plate 211, the separator 213, and the second electrode plate 212 are mutually laminated. Accordingly, the electrode assembly 210 may have a substantially jelly roll shape. A cross-sectional shape of the electrode assembly 210 may have any of various shapes, such as an oval or a polygon, as an alternative to a circle shown in FIGS. 3 and 4. Here, the winding axis C may refer to a straight line passing through the center of the electrode assembly 210.

In an embodiment, the first electrode plate 211 may function as a positive electrode of the electrode assembly 210. The first electrode plate 211 may be formed as a foil including a metal material, such as aluminum or an aluminum alloy. A type, size, shape, and the like of the first electrode plate 211 are not particularly limited as long as the first electrode plate 211 is conductive and does not cause chemical changes in the battery cell. The first electrode plate 211 may be wound to have a number of turns centered on the winding axis C.

A first active material layer may be applied to at least a part of the first electrode plate 211. The first active material layer may be applied to both, or opposite, surfaces of the first electrode plate 211, or may be applied to only one surface of the first electrode plate 211.

In an embodiment, the first electrode plate 211 functions as the positive electrode, and the first active material layer may include a positive electrode active material.

The positive electrode active material may be a compound capable of reversible intercalation and deintercalation of lithium (lithiated intercalation compound). In an embodiment, one or more of a composite oxide of lithium and a metal selected from cobalt, manganese, nickel, and a combination thereof may be used.

In an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM), and may also include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM).

The first active material layer may further include a positive electrode conductive material.

The positive electrode conductive material imparts conductivity to the first active material layer and any suitable electrically conductive material that does not cause chemical changes may be used. Examples of the positive electrode conductive material may include a carbon-based material, such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, silver, etc., a conductive polymer, such as a polyphenylene derivative, or a mixture thereof.

The first active material layer may further include a positive electrode binder.

The positive electrode binder may securely attach particles constituting the positive electrode active material to each other well and also securely attach the positive electrode active material to the first electrode plate 211.

An example of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the positive electrode binder, a cellulose-based compound may be further contained to impart viscosity. This cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

In an embodiment, the second electrode plate 212 may function as a negative electrode of the electrode assembly 210. The second electrode plate 212 may be formed as a foil including a metal material, such as copper, a copper alloy, nickel, or a nickel alloy. The second electrode plate 212 may be disposed to face the first electrode plate 211 to be spaced by an interval (e.g., a predetermined interval) apart from the first electrode plate 211.

A type, size, shape, and the like of the second electrode plate 212 are not particularly limited as long as the second electrode plate 212 is conductive and does not cause chemical changes in the battery cell. The second electrode plate 212 may be wound to have a number of turns centered on the winding axis C.

A second active material layer may be applied to at least a part of the second electrode plate 212. The second active material layer may be applied to both, or opposite, surfaces of the second electrode plate 212, or may be applied to only one surface of the second electrode plate 212.

In the illustrated embodiment, the second electrode plate 212 functions as the negative electrode, and the second active material layer may include a negative electrode active material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

As the material capable of doping and dedoping lithium, a Si-based negative electrode active material or Sn-based negative electrode active material may be used. The Si-based negative electrode active material may include silicon, a silicon-carbon composite, SiOₓ (0<x≤2), a Si-Q alloy (where Q is selected from alkali metals, alkaline earth metals, group 13 elements, group 14 elements (excluding Si), group 15 elements, group 16 elements, transition metals, rare earth elements, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon with which a surface of the silicon particles is coated. For example, the silicon-carbon composite may include a secondary particle (a core) in which silicon primary particles are assembled and an amorphous carbon coating layer (a shell) located on the surface of the secondary particle. The amorphous carbon may be located between the silicon primary particles such that, for example, the silicon primary particles may be coated with the amorphous carbon. The secondary particle may be present by being dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or the Sn-based negative electrode active material may be used in combination with the carbon-based negative electrode active material.

The second active material layer may further include a negative electrode conductive material and a negative electrode binder.

The negative electrode conductive material imparts conductivity to the second active material layer, and any suitable electrically conductive material that does not cause chemical changes may be used. Examples of the negative electrode conductive material may include natural graphite, artificial graphite, carbon black, acetylene black, Ketjen black, carbon-based materials, such as carbon fibers, carbon nanofibers, carbon nanotubes, etc., a metal-based material in the form of a metal powder or metal fiber including copper, nickel, aluminum, silver, etc., a conductive polymer, such as a polyphenylene derivative, or a mixture thereof.

The negative electrode binder may securely attach the negative electrode active material particles to each other and also securely attach the negative electrode active material to the second electrode plate 212.

An example of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the negative electrode binder, a cellulose-based compound may be further contained to impart viscosity. This cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The separator 213 may be disposed between the first electrode plate 211 and the second electrode plate 212. The separator 213 may prevent or substantially prevent a short circuit between the first electrode plate 211 and the second electrode plate 212 while allowing the movement of lithium ions between the first electrode plate 211 and the second electrode plate 212.

As the separator 213, polyethylene, polypropylene, polyvinylidene fluoride, or a multilayer film of two or more layers thereof may be used, and a mixed multilayer separator, such as a polyethylene/polypropylene two-layer separator, a polypropylene/polypropylene/polyethylene three-layer separator, a polyethylene/polyethylene/polypropylene three-layer separator, etc., may be used.

The separator 213 may include a porous substrate and a coating layer including an organic material, an inorganic material, or a combination thereof located on one surface or both, or opposite, surfaces of the porous substrate.

The porous substrate may be a polymer film formed of any polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth)acryl-based polymer.

The inorganic material may include inorganic particles selected from Al₂O₃, SiO₂, TiO₂, SnO2, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in a single coating layer or may be present in a form in which a coating layer including an organic material and a coating layer including an inorganic material are stacked.

The separator 213 may be provided as a pair of separators 213. The pair of separators 213 may be disposed to face both, or opposite, surfaces of the first electrode plate 211 or the second electrode plate 212, respectively. The pair of separators 213 may be wound around the winding axis C together with the first electrode plate 211 and the second electrode plate 212.

The electrode assembly 210 according to the illustrated embodiment may further include a first tab 214 and a second tab 215.

The first tab 214 may be connected to the first electrode plate 211. The first tab 214 according to an embodiment may extend from the first electrode plate 211 to a side of the electrode assembly 210. The first tab 214 may be provided as a plurality of first tabs 214.

The plurality of first tabs 214 may be arranged in a circumferential direction centered on the winding axis C. As the first electrode plate 211 is wound around the winding axis C, the plurality of first tabs 214 may be arranged in the circumferential direction centered on the winding axis C and at the same time in a radial direction centered on the winding axis C. For example, the plurality of first tabs 214 may be disposed to form a spiral shape centered on the winding axis C.

The first tab 214 may be formed of the same material as the first electrode plate 211. The first tab 214 may be formed integrally with the first electrode plate 211, or may be manufactured separately from the first electrode plate 211 and then connected to the first electrode plate 211.

The second tab 215 may be connected to the second electrode plate 212. The second tab 215 may extend from the second electrode plate 212 to another side of the electrode assembly 210. For example, the first tab 214 and the second tab 215 may be formed to extend in opposite directions from both, or opposite, end portions of the electrode assembly 210. However, the first tab 214 and the second tab 215 are not limited thereto, and may extend in the same direction from an end portion of the electrode assembly 210.

The second tab 215 may be provided as a plurality of second tabs 215. The plurality of second tabs 215 may be arranged in the circumferential direction centered on the winding axis C. As the second electrode plate 212 is wound around the winding axis C, the plurality of second tabs 215 may be arranged in the circumferential direction centered on the winding axis C and at the same time in the radial direction centered on the winding axis C. For example, the plurality of second tabs 215 may be disposed to form a spiral shape centered on the winding axis C.

The second tab 215 may be formed of the same material as the second electrode plate 212. The second tab 215 may be formed integrally with the second electrode plate 212, or may be manufactured separately from the second electrode plate 212 and then connected to the second electrode plate 212.

The case 220 may generally form an exterior of the battery cell 200 and accommodate the electrode assembly 210. The case 220 may be provided to be electrically conductive. For example, the case 220 may include at least one material of steel, e.g. stainless steel, aluminum, and an aluminum alloy. Accordingly, the case 220 may protect the electrode assembly 210 from external impacts and perform a heat dissipation function of dissipating heat accompanying the charging and discharging operation of the electrode assembly 210 to the outside.

The case 220 according to an embodiment may include a cylindrical can 221. A central axis of the can 221 may be disposed on a same straight line as the winding axis C of the electrode assembly 210.

The case 220 may include a closed portion 223 that closes a first end portion of the can 221. The closed portion 223 according to the illustrated embodiment may be formed to have a generally circular plate shape. The closed portion 223 may be disposed perpendicular to the winding axis C. The circumferential surface of the closed portion 223 may be joined to the can 221. The closed portion 223 may be formed integrally with the can 221 by a drawing process or the like, or may be manufactured separately from the can 221 and then joined to the can 221 by welding or the like.

The case 220 may include an opening 222 that opens a second end portion of the can 221. The opening 222 may provide a path for the electrode assembly 210 to be inserted into the case 220 at a second end region of the case 220. The opening 222 according to an embodiment may refer to a hollow space surrounded by the second end region of the can 221 located at an opposite side of the closed portion 223.

In an embodiment, the first tab 214 may be disposed to face the opening 222 inside the case 220, and the second tab 215 may be disposed to face the closed portion 223 inside the case 220.

The case 220 according to the illustrated embodiment may further include a beading portion 224.

The beading portion 224 may protrude toward the inside of the case 220. The beading portion 224 may limit the cap assembly 230 described below from being inserted into the case 220 beyond a certain (e.g., a set) distance, and prevent or substantially prevent the electrode assembly 210 from being detached from the case 220.

The beading portion 224 according to an embodiment may be disposed at the second end portion of the can 221 adjacent to the opening 222. A central portion of the beading portion 224 may be formed concavely toward the winding axis C. The beading portion 224 may be formed integrally with the can 221, or may be manufactured separately from the can 221 and then coupled to the can 221.

Herein, although the battery cell 200 according to the illustrated embodiment is described as an example that includes the beading portion 224, the present disclosure is not limited thereto, and the battery cell 200 may be configured in a form in which the beading portion 224 is omitted.

The cap assembly 230 may be disposed to face the electrode assembly 210 and may seal the case 220. For example, the cap assembly 230 may be disposed at the second end portion of the can 221, that is, at the same side as the opening 222. The cap assembly 230 may be disposed to face the electrode assembly 210 along the winding axis C.

In the illustrated embodiment, the cap assembly 230 may be electrically connected to the first tab 214. In the illustrated embodiment, the first electrode plate 211 functions as the positive electrode of the electrode assembly 210, and the cap assembly 230 may function as a positive electrode terminal of the secondary battery.

The cap assembly 230 according to the illustrated embodiment may include a cap up 231, a cap down 232, a vent plate 233, and a connecting portion 234.

The cap up 231 may form an outer exterior of the cap assembly 230. A central axis of the cap up 231 may be located coaxially with the winding axis C. A central portion of the cap up 231 may protrude toward the outside of the case 220. The cap up 231 may be made of an electrically conductive material, such as nickel, aluminum, or copper.

The cap up 231 according to the illustrated embodiment may include a small diameter portion 231a, a large diameter portion 231b, and a bridge 231c.

The small diameter portion 231a and the large diameter portion 231b may have shapes of circular plates with different diameters. The diameter of the small diameter portion 231a may be smaller than the diameter of the large diameter portion 231b. Central axes of the small diameter portion 231a and the large diameter portion 231b may be disposed coaxially with the winding axis C. The small diameter portion 231a and the large diameter portion 231b may be disposed to face each other in the first direction. For example, the large diameter portion 231b and the small diameter portion 231a may be sequentially disposed in the first direction from the electrode assembly 210. The small diameter portion 231a may protrude toward the outside of the case 220. The large diameter portion 231b may have a ring shape in which a central portion thereof is formed to be hollow.

The bridge 231c may be disposed between the small diameter portion 231a and the large diameter portion 231b. Both, or opposite, end portions of the bridge 231c may be connected to an outer circumferential surface of the small diameter portion 231a and an inner circumferential surface of the large diameter portion 231b, respectively. The bridge 231c may have a curved shape that extends to be curved from the small diameter portion 231a toward the large diameter portion 231b.

A cap up hole 231d through which gas or the like generated inside the case 220 is discharged to the outside of the case 220 may be formed in the cap up 231. The cap up hole 231d according to an embodiment may have a shape of a hole passing through the bridge 231c of the cap up 231. The cap up hole 231d may be provided as a plurality of cap up holes 231d. The plurality of cap up holes 231d may be arranged at intervals (e.g., predetermined intervals) along the circumferential surface of the central portion of the cap up 231.

The cap down 232 may be disposed to face the cap up 231 and may be electrically connected to the electrode assembly 210.

The cap down 232 according to the illustrated embodiment may be formed to have a generally circular plate shape. The cap down 232 may be disposed inside the case 220. The cap down 232 may be disposed below the cap up 231. That is, the cap down 232 may be disposed between the cap up 231 and the electrode assembly 210. A central axis of the cap down 232 may be disposed coaxially with the winding axis C. An upper surface of the cap down 232 may be disposed spaced apart from a lower surface of the cap up 231.

An area of the cap down 232 may be smaller than a cross-sectional area of the electrode assembly 210 perpendicular to the winding axis C. However, the area of the cap down 232 is not limited thereto, and may be equal to or larger than the cross-sectional area of the electrode assembly 210.

The cap down 232 may be made of an electrically conductive material, such as nickel, aluminum, or copper. The cap down 232 may be electrically connected to the first tab 214 of the electrode assembly 210.

A cap down hole 232a that passes through the cap down 232 in a vertical direction may be formed in the cap down 232. The cap down hole 232a may provide a path for a gas or the like generated inside the case 220 to pass through the cap down 232, such as if an overcurrent occurs. The cap down hole 232a may be provided as a plurality of cap down holes 232a. The plurality of cap down holes 232a may be arranged along a circumference centered on the central axis of the cap down 232.

The vent plate 233 may be disposed between the cap up 231 and the cap down 232. The vent plate 233 may provide a current conduction path between the cap up 231 and the cap down 232 during normal operation of the battery cell 200. The vent plate 233 may be made of an electrically conductive material, such as nickel, aluminum, or copper.

A shape of the vent plate 233 may be deformed by pressure of gas generated inside the case 220 if an overcurrent occurs, and the vent plate 233 may block an electrical connection between the cap up 231 and the cap down 232. The vent plate 233 may rupture if the internal pressure of the case 220 rises above a certain (e.g., a set) level, thereby opening a gas discharge path between the cap up hole 231d and the cap down hole 232a.

The vent plate 233 according to the illustrated embodiment may be formed to have a generally circular plate shape. The vent plate 233 may be disposed such that upper and lower surfaces thereof face the cap up 231 and the cap down 232, respectively. A lower surface of the vent plate 233 may be disposed to face the cap down hole 232a. A central axis of the vent plate 233 may be disposed coaxially with the winding axis C.

The vent plate 233 may include a contact portion 233a.

The contact portion 233a according to the illustrated embodiment may protrude from the vent plate 233 toward the cap down 232 and come into contact with the cap down 232. The contact portion 233a may electrically connect the vent plate 233 and the cap down 232. The contact portion 233a may be disposed in the central portion of the vent plate 233. A central axis of the contact portion 233a may be disposed coaxially with the winding axis C.

If the vent plate 233 is deformed due to an increase in the internal pressure of the case 220, the contact portion 233a may be separated from the cap down 232. Accordingly, if an overcurrent occurs, the electrical connection between the cap down 232 and the vent plate 233 may be cut off.

An insulator 233b may be disposed between the vent plate 233 and the cap down 232. The insulator 233b may prevent or substantially prevent a remaining region of the vent plate 233 except for the contact portion 233a from coming into direct contact with the cap down 232. Accordingly, the insulator 233b may induce the electrical connection between the vent plate 233 and the cap down 232 to be made only through the contact portion 233a as described below.

The insulator 233b according to an embodiment may be formed to have a hollow-type ring shape. A central axis of the insulator 233b may be located coaxially with the winding axis C and the central axis of the vent plate 233. An upper surface of the insulator 233b may be in contact with the lower surface of the vent plate 233, and a lower surface of the insulator 233b may be in contact with the upper surface of the cap down 232. The insulator 233b may be formed of an insulating material, such as polyethylene (PE), polypropylene (PP), polyethylene terephthalate (PET), or the like.

The connecting portion 234 may extend from the vent plate 233 and may be connected to the cap up 231. The connecting portion 234 may support the vent plate 233 against the cap up 231 and provide an electrical connection between the cap up 231 and the vent plate 233. The connecting portion 234 may be formed of the same material as the vent plate 233. The connecting portion 234 may be formed integrally with the vent plate 233, or may be manufactured separately from the vent plate 233 and then coupled to the vent plate 233.

The connecting portion 234 according to the illustrated embodiment may include a support portion 234a and a hinge portion 234b.

The support portion 234a may form an exterior of a side of the connecting portion 234 and may be connected to the cap up 231.

The support portion 234a according to the illustrated embodiment may be disposed to surround an end portion of the cap up 231, more specifically, an edge region of the large diameter portion 231b. For example, the support portion 234a may have a generally U-shaped cross-sectional shape. An end portion of the support portion 234a may be brought into contact with an upper surface of the large diameter portion 231b, and another end portion of the support portion 234a may be bent downward to be brought into contact with a lower surface of the large diameter portion 231b. The support portion 234a may be joined to the cap up 231 by any of various types of coupling methods, such as any of laser welding, ultrasonic welding, and resistance welding.

The support portion 234a may be disposed to face the beading portion 224. For example, the support portion 234a may be disposed above the beading portion 224 as shown in FIG. 4. Accordingly, when assembling the battery cell 200, the beading portion 224 may limit the cap assembly 230 from being inserted into the case 220 beyond a certain (e.g., a set) distance.

The hinge portion 234b may form an exterior of another side of the connecting portion 234 and may be disposed between the support portion 234a and the vent plate 233. The hinge portion 234b may interconnect the support portion 234a and the vent plate 233 and guide the deformation of the vent plate 233 if the internal pressure of the case 220 increases.

The hinge portion 234b according to the illustrated embodiment may have a generally circular ring shape and may be disposed between the support portion 234a and the vent plate 233. An inner circumferential surface of the hinge portion 234b may be connected to the vent plate 233, and an outer circumferential surface of the hinge portion 234b may be connected to another end portion of the support portion 234a. The hinge portion 234b may extend downward in a stepwise manner from the outer circumferential surface toward the inner circumferential surface. For example, the central portion of the hinge portion 234b may have a cross-section bent in an L shape.

If an overcurrent occurs, the vent plate 233 may be deformed based on the hinge portion 234b. For example, if the internal pressure of the case 220 increases due to an overcurrent, the gas passing through the cap down hole 232a presses the vent plate 233 upward, and the vent plate 233 may be deformed into a shape in which the central portion protrudes convexly toward the cap up 231 due to a change in the bending angle of the hinge portion 234b.

The battery cell 200 according to the illustrated embodiment may further include a vent notch 233c.

The vent notch 233c may be formed concavely from an outer surface of the vent plate 233. The vent notch 233c may guide the rupture of the vent plate 233 if the internal pressure of the case 220 rises above a certain (e.g., a set) level.

The vent notch 233c according to the illustrated embodiment may have a shape of a groove that is concavely recessed from the outer surface of the vent plate 233. The vent notch 233c may be formed such that a cross-sectional area thereof gradually narrows toward an end portion. The vent notch 233c may be formed in a ring shape along an arc centered on the winding axis C.

A crimping portion 225 for fixing the cap assembly 230 described below may be formed at the second end portion of the can 221 in which the opening 222 is formed.

The crimping portion 225 according to the illustrated embodiment may be bent from the second end portion of the can 221 and may be disposed to surround an outer surface of the support portion 234a. The crimping portion 225 may fix a position of the cap assembly 230 and prevent or substantially prevent the cap assembly 230 from being detached from the case 220.

The crimping portion 225 may be formed integrally with the case 220, or may be manufactured separately from the case 220 and then coupled to the case 220. A material of the crimping portion 225 may be formed to be the same as a material of the case 220.

The battery cell 200 according to the illustrated embodiment may further include a gasket G disposed between the crimping portion 225 and the cap assembly 230. The gasket G may electrically insulate the case 220 and the cap assembly 230 from each other and prevent moisture or electrolyte from flowing inward or outward between the case 220 and the cap assembly 230.

The gasket G according to the illustrated embodiment may include an insulating material, such as rubber, polyethylene (PE), polypropylene (PP), or polyethylene terephthalate (PET). The gasket G may be formed to generally have a ring shape. The gasket G may have a generally U-shaped cross-section. An upper portion of an outer surface of the gasket G may be in close contact with an inner surface of the crimping portion 225. A lower portion of the outer surface of the gasket G may be in close contact with an upper surface of the beading portion 224. An inner surface of the gasket G may surround the outer surface of the support portion 234a and may be in close contact with the outer surface of the support portion 234a. A lower surface of the support portion 234a may be supported against the upper surface of the beading portion 224 by the gasket G.

The battery cell 200 according to the illustrated embodiment may further include a first current collecting member 250 and a second current collecting member 260.

The first current collecting member 250 may be disposed between the cap assembly 230 and the first tab 214 of the electrode assembly 210. The first current collecting member 250 may have a plate shape that is perpendicular to the winding axis C. The first current collecting member 250 may be formed of a conductive material, such as copper, aluminum, or nickel.

A surface of the first current collecting member 250 may be electrically connected to the first tab 214. For example, a surface of the first current collecting member 250 may be in contact with the first tab 214 of the electrode assembly 210, and the first current collecting member 250 and the first tab 214 may be joined to each other by laser welding or the like.

Another surface of the first current collecting member 250 may be electrically connected to the cap assembly 230. For example, the first current collecting member 250 may be electrically connected to the cap assembly 230 by a first connection tab 251. The first connection tab 251 may be formed of a conductive material, such as copper, aluminum, or nickel. The first connection tab 251 may be disposed between the first current collecting member 250 and the cap down 232. Both, or opposite, end portions of the first connection tab 251 may be connected to the first current collecting member 250 and the cap down 232, respectively. Accordingly, the cap assembly 230 according to the illustrated embodiment may be electrically connected to the first electrode plate 211 and may function as a positive electrode terminal.

However, the first current collecting member 250 is not limited thereto, and, in other embodiments, may be in direct contact and connected to the cap down 232 without the first connection tab 251.

The second current collecting member 260 may be disposed between the closed portion 223 of the case 220 and the electrode assembly 210. The second current collecting member 260 may have a plate shape that is perpendicular to the winding axis C. The second current collecting member 260 may be formed of a conductive material, such as copper, aluminum, or nickel.

A surface of the second current collecting member 260 may be electrically connected to the second tab 215. For example, a surface of the second current collecting member 260 may be in contact with the second tab 215 of the electrode assembly 210, and the second current collecting member 260 and the second tab 215 may be joined to each other by laser welding or the like.

Another surface of the second current collecting member 260 may be electrically connected to the case 220. For example, the second current collecting member 260 may be electrically connected to the case 220 by a second connection tab 261. The second connection tab 261 may be formed of a conductive material, such as copper, aluminum, or nickel. The second connection tab 261 may be disposed between the second current collecting member 260 and the closed portion 223. Both, or opposite, end portions of the second connection tab 261 may be connected to the second current collecting member 260 and the closed portion 223, respectively. Accordingly, the closed portion 223 according to the illustrated embodiment may be electrically connected to the second electrode plate 212 and may function as a negative electrode terminal.

However, the second current collecting member 260 is not limited thereto, and, in other embodiments, may be in direct contact and connected to the closed portion 223 without the second connection tab 261.

Although the battery cell 200 according to the illustrated embodiment is described as including the first current collecting member 250 and the second current collecting member 260 in the above description, the battery cell 200 is not limited thereto, and may be configured such that the first current collecting member 250 and the second current collecting member 260 are omitted. In this case, the first electrode plate 211 may be connected to the cap assembly 230 by the first connection tab 251, and the second electrode plate 212 may be connected to the case 220 by the second connection tab 261.

The winding axis C of the battery cell 200 according to the illustrated embodiment may be disposed parallel to the second direction. For example, the closed portion 223 and the cap assembly 230 of the battery cell 200 may be disposed to face each other in the second direction. That is, a disposition direction of the battery cell 200 and a disposition direction of the first housing body 110 and the second housing body 120 may be perpendicular to each other.

The battery cell 200 may be provided as a plurality of battery cells 200. The plurality of battery cells 200 may be disposed parallel to each other. For example, the winding axes C of the plurality of battery cells 200 may all be disposed parallel to the second direction. The plurality of battery cells 200 may be disposed in various patterns, such as a grid shape, inside the housing 100.

In the present embodiment, the cap assemblies 230 of the plurality of battery cells 200 may all be disposed to face the second direction (leftward direction as shown in FIG. 2). The disposition of the cap assembly 230 to face the second direction may refer to a state in which an outer surface of the small diameter portion 231a is disposed to face the second direction, and an outer surface of the closed portion 223 is disposed to face a direction opposite to the second direction.

The plurality of battery cells 200 may be electrically connected by a bus bar (not shown). The plurality of battery cells 200 may be connected in series or parallel by the bus bar.

The plurality of battery cells 200 may be supported by a holder 201.

The holder 201 may have a structure capable of mounting and storing the battery cells 200. The holder 201 may support the battery cells 200 such that the battery cells 200 maintain a certain (e.g. a set) arrangement while ensuring stable electrical connection with other electrical components. The holder 201 may cover at least a part of an outer surface of the battery cell 200 facing the housing 100. The holder 201 may separate the battery cells 200 at a certain (e.g., a set) interval.

The holder 201 according to the illustrated embodiment may include a first holder 202 and a second holder 203 that support both, or opposite, end portions of the battery cell 200, respectively.

As the winding axis C of the battery cell 200 is disposed parallel to the second direction, the first holder 202 and the second holder 203 may be disposed to face each other inside the housing 100 in the second direction.

Both, or opposite, end portions of the battery cell 200 may be inserted into insides of the first holder 202 and the second holder 203, respectively.

For example, a first insertion hole 202a that passes through both, or opposite, surfaces of the first holder 202 may be formed in the first holder 202, and a second insertion hole 203a that passes through both, or opposite, surfaces of the second holder 203 may be formed in the second holder 203.

A central axis of the first insertion hole 202a and a central axis of the second insertion hole 203a may be disposed coaxially. In the illustrated embodiment, the first holder 202 and the second holder 203 are disposed to face each other in the second direction, and the central axis of the first insertion hole 202a and the central axis of the second insertion hole 203a may be disposed parallel to the second direction.

Both, or opposite, end portions of the battery cell 200 may be inserted into the first insertion hole 202a and the second insertion hole 203a, respectively. The cap assembly 230 and the closed portion 223 of the battery cell 200 may be exposed to an internal space of the housing 100 through the first insertion hole 202a and the second insertion hole 203a, respectively.

The first insertion hole 202a and the second insertion hole 203a may be provided as a plurality of first insertion holes 202a and a plurality of second insertion holes 203a. The number of the first insertion holes 202a and the number of the second insertion holes 203a may be the same as a number of the battery cells 200. The central axis of each of the first insertion holes 202a and the central axis of each of the second insertion holes 203a may be disposed coaxially. Both, or opposite, end portions of each of the battery cells 200 may be individually inserted into different first insertion holes 202a and second insertion holes 203a. Accordingly, the plurality of battery cells 200 may be supported while maintaining a certain (e.g., a set) interval inside the housing 100.

The fire extinguishing member 300 may be disposed inside the housing 100. The fire extinguishing member 300 may be disposed to face the battery cell 200 inside the housing 100. The fire extinguishing member 300 may extinguish flames generated from the battery cell 200 if the battery cell 200 experiences thermal runaway. Accordingly, the fire extinguishing member 300 may prevent or substantially prevent chain ignition caused by the thermal runaway of the battery cell 200.

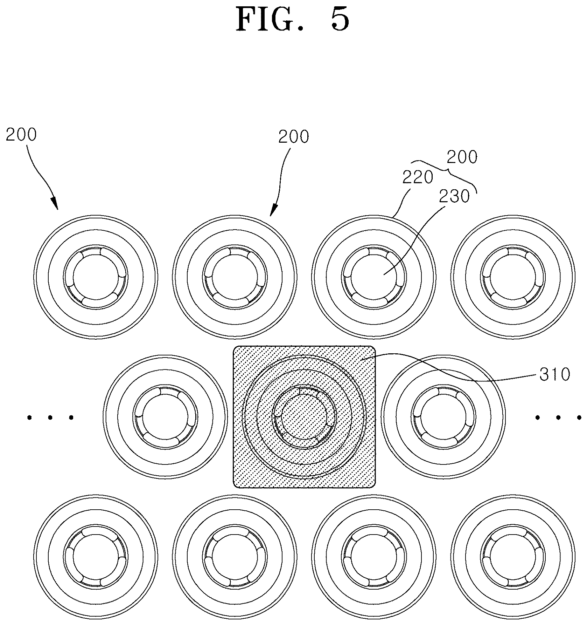

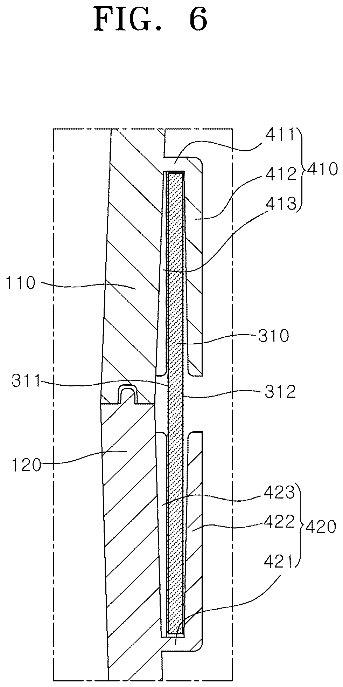

FIG. 5 is a plan view schematically showing a configuration of a fire extinguishing member 300 according to an embodiment of the present disclosure; and FIG. 6 is a cross-sectional view schematically showing the configuration of the fire extinguishing member 300 of FIG. 5.

Referring to FIGS. 1 to 6, the fire extinguishing member 300 according to the embodiment may include a fire extinguishing sheet 310.

The fire extinguishing sheet 310 may have a plate shape having a first surface 311 and a second surface 312 that are opposite to each other. Areas of the first surface 311 and the second surface 312 may be the same. A cross-sectional shape of the fire extinguishing sheet 310 may have any of various shapes, such as a circle, an oval, or a polygon, as an alternative to the quadrangular shape shown in the drawings.

In an embodiment, the fire extinguishing sheet 310 may be configured such that a solid-state fire extinguishing material is formed in the form of a sheet. In this case, the fire extinguishing sheet 310 may maintain a solid state at a certain (e.g., a set) temperature or lower and spray a fire extinguishing material into the internal spaces of the housing 100 and the battery cell 200 through a combustion reaction of the fire extinguishing sheet 310 above the certain (e.g., set) temperature.

In another embodiment, the fire extinguishing sheet 310 may be configured in a form in which a liquid or gaseous extinguishing material is accommodated inside an outer shell made of a material that can be melted by heat. In this case, the outer shell of the fire extinguishing sheet 310 may melt above a certain (e.g., a set) temperature, and the fire extinguishing material accommodated therein may be sprayed into the internal spaces of the housing 100 and the battery cell 200.

The fire extinguishing material may be in a solid state, such as a powder, or in a liquid or gaseous state. The fire extinguishing material may include any of various substances having fire extinguishing properties, including sodium bicarbonate (NaHCO₃), potassium bicarbonate (KHCO₃), ammonium phosphate (NH₄H₂PO₃), or a mixture of potassium bicarbonate (KHCO₃) and urea (CO(NH₂)₂), halogen compounds, halons, water-based fire extinguishing agents, carbon dioxide, and the like.

The fire extinguishing sheet 310 may be disposed between the housing 100 and the battery cell 200. For example, the fire extinguishing sheet 310 may be disposed between the housing 100 and the cap assembly 230 of the battery cell 200. As the winding axis C of the battery cell 200 is disposed parallel to the second direction, the fire extinguishing sheet 310 and the cap assembly 230 may be disposed to face each other in the second direction. Accordingly, the fire extinguishing sheet 310 may come into direct contact with flames or gas discharged through the cap assembly 230 if the battery cell 200 experiences thermal runaway.

The first surface 311 of the fire extinguishing sheet 310 may be disposed to face an inner wall surface of the housing 100 facing the cap assembly 230. In the embodiment, the fire extinguishing sheet 310 may be disposed symmetrically based on boundary regions of the first housing body 110 and the second housing body 120. For example, a part of the first surface 311 of the fire extinguishing sheet 310 may be disposed to face an inner wall surface of the first housing body 110, and a remaining portion of the first surface 311 of the fire extinguishing sheet 310 may be disposed to face an inner wall surface of the second housing body 120.

The second surface 312 of the fire extinguishing sheet 310 may be disposed to face the cap assembly 230 of at least one battery cell 200 among the plurality of battery cells 200. In the illustrated embodiment, an area of the fire extinguishing sheet 310 may be greater than a cross-sectional area of the battery cell 200. Here, the area of the fire extinguishing sheet 310 may be an area of the second surface 312, and the cross-sectional area of the battery cell 200 may be a cross-sectional area of the can 221 perpendicular to the winding axis C.

The fire extinguishing sheet 310 may be provided as one or more fire extinguishing sheets 310. Although an example in which two fire extinguishing sheets 310 are formed is shown in FIG. 1, a number of fire extinguishing sheets 310 is not limited thereto, and it is also possible to form one or three or more.

Each of the fire extinguishing sheets 310 may be disposed to face the cap assembly 230 of at least one battery cell 200. In the illustrated embodiment, each of the fire extinguishing sheets 310 may be individually disposed to face the cap assembly 230 of a different battery cell 200.

In the illustrated embodiment, as the cap assemblies 230 of the plurality of battery cells 200 are all disposed to face the second direction, the plurality of fire extinguishing sheets 310 may all be disposed at positions spaced apart from the battery cells 200 in the second direction, for example, between the housing 100 and the first holder 202.

The support member 400 may extend from the housing 100 and support the fire extinguishing member 300, more specifically, the fire extinguishing sheet 310. The support member 400 may function as a configuration for fixing the position of the fire extinguishing sheet 310 at a fixed position inside the housing 100.

The support member 400 may be provided as a plurality of support members 400. A number of support members 400 may be the same as a number of the fire extinguishing sheets 310. In an embodiment, each of the support members 400 may individually support a different fire extinguishing sheet 310.

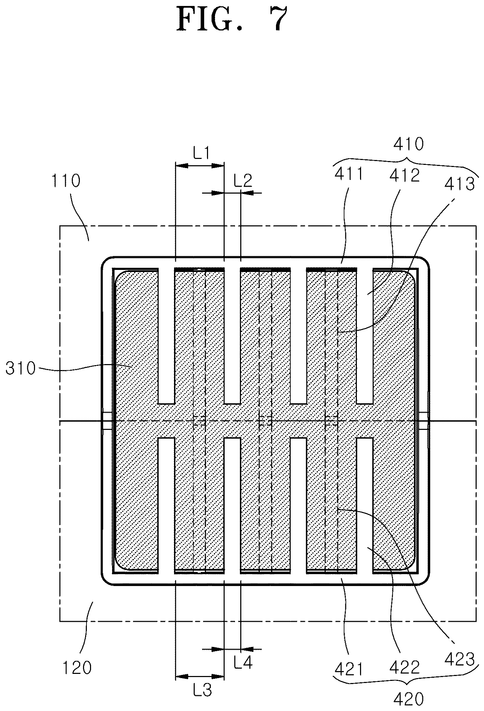

FIG. 7 is a plan view schematically showing a configuration of a support member 400 according to an embodiment of the present disclosure.

Referring to FIGS. 1 to 7, the support member 400 may include a first support member 410 and a second support member 420.

The first support member 410 may form an exterior of a side of the support member 400 and support a side of the fire extinguishing sheet 310.

In the illustrated embodiment, the first support member 410 may extend from the first housing body 110. The first support member 410 may support a side of a region of the fire extinguishing sheet 310 facing the first housing body 110.

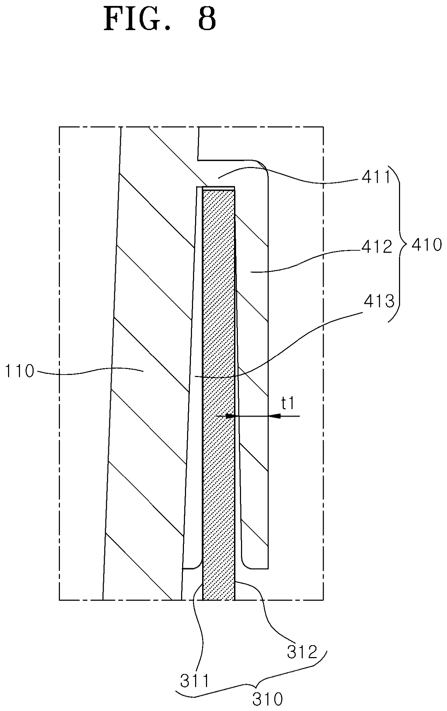

FIG. 8 is an enlarged view schematically showing a configuration of the first support member 410 according to the illustrated embodiment of the present disclosure.

Referring to FIGS. 7 and 8, the first support member 410 according to the embodiment may include a first support body 411 and a first fixed rib 412.

The first support body 411 may be disposed to protrude from the first housing body 110 and surround a side of the fire extinguishing sheet 310.

The first support body 411 according to the illustrated embodiment may have a form of a partition wall protruding from an inner wall surface of the first housing body 110 toward the battery cell 200. The first support body 411 may have a "U"-shaped cross-section in which a side thereof is open. The open side of the first support body 411 may be disposed toward a bottom surface of the second housing body 120.

An inner surface of the first support body 411 may be disposed to surround a peripheral surface of a part of the fire extinguishing sheet 310 facing the first housing body 110. The inner surface of the first support body 411 may be in contact with the peripheral surface of the fire extinguishing sheet 310 and may be spaced by an interval (e.g., a predetermined interval) apart from the peripheral surface of the fire extinguishing sheet 310.

The first fixed rib 412 may extend from the first support body 411 and come into contact with the second surface 312 of the fire extinguishing sheet 310.

The first fixed rib 412 according to the illustrated embodiment may extend from an end portion of the first support body 411 protruding toward the battery cell 200.

An inner surface of the first fixed rib 412 may be disposed to face a space surrounded by the first support body 411. The inner surface of the first fixed rib 412 may be spaced by an interval (e.g., a predetermined interval) apart from the first housing body 110.

A longitudinal direction of the first fixed rib 412 may intersect the second direction. In an embodiment, for example, the longitudinal direction of the first fixed rib 412 may be parallel to the first direction. In the illustrated embodiment, the longitudinal direction of the first fixed rib 412 may be parallel to the third direction.

A side of the fire extinguishing sheet 310 facing the first housing body 110 may be inserted between the first housing body 110 and the first fixed rib 412. The inner surface of the first fixed rib 412 facing the first housing body 110 may come into contact with the second surface 312 of the fire extinguishing sheet 310. Accordingly, the first fixed rib 412 may prevent or substantially prevent the fire extinguishing sheet 310 from being detached from the space surrounded by the first support body 411.

The first fixed rib 412 may be provided as a plurality of first fixed ribs 412. The plurality of first fixed ribs 412 may be disposed parallel to each other. The plurality of first fixed ribs 412 may be arranged at a certain (e.g., a set) interval L1 in a width direction of the first fixed rib 412. In the illustrated embodiment, as the longitudinal direction of the first fixed rib 412 is parallel to the first direction, the width direction of the first fixed rib 412 may be, for example, a direction parallel to the third direction.

In the illustrated embodiment, the inner surface of each of the first fixed ribs 412 may be individually in contact with different locations of the second surface 312 of the fire extinguishing sheet 310. In the illustrated embodiment, an area of each of the first fixed ribs 412 may be smaller than the area of the second surface 312 of the fire extinguishing sheet 310. Here, the area of the first fixed rib 412 may be a cross-sectional area of the first fixed rib 412 parallel to the second surface 312. Accordingly, if the battery cell 200 experiences thermal runaway, the fire extinguishing material sprayed by the fire extinguishing member 300 may be easily sprayed through a space between the neighboring first fixed ribs 412.

In the illustrated embodiment, the interval L1 between the neighboring first fixed ribs 412 may be greater than a width L2 of each of the first fixed ribs 412. In the illustrated embodiment, for example, a ratio (L1/L2) of the interval L1 between the neighboring first fixed ribs 412 to the width L2 of the first fixed rib 412 may be 3 to 12. If the ratio (L1/L2) of the interval L1 between the neighboring first fixed ribs 412 to the width L2 of the first fixed rib 412 is less than 3, a size of a region where the fire extinguishing material may be sprayed may be excessively reduced, thereby reducing the fire extinguishing efficiency. If the ratio (L1/L2) of the interval L1 between the neighboring first fixed ribs 412 to the width L2 of the first fixed rib 412 is greater than 12, the supporting force for the fire extinguishing sheet 310 may be excessively weakened.

In the illustrated embodiment, a thickness t1 of the first fixed rib 412 parallel to the second direction may decrease toward an end portion of the first fixed rib 412. For example, the inner surface of the first fixed rib 412 facing the second surface 312 of the fire extinguishing sheet 310 may be disposed at an angle with respect to the second surface 312. The inner surface of the first fixed rib 412 located at the end portion of the first fixed rib 412 may be spaced by an interval (e.g., a predetermined interval) apart from the second surface 312. The inner surface of the first fixed rib 412 located on the side adjacent to the first support body 411 may come into contact with an edge region of the second surface 312. Accordingly, the first fixed rib 412 according to the illustrated embodiment may allow the fire extinguishing sheet 310 to be inserted more easily between the first housing body 110 and the first fixed rib 412 in an end region of the first fixed rib 412. In addition, the first fixed rib 412 may firmly support the fire extinguishing sheet 310 by making strong contact with an edge region of the fire extinguishing sheet 310 after the fire extinguishing sheet 310 is completely inserted between the first housing body 110 and the first fixed rib 412.

The first support member 410 according to the illustrated embodiment may further include a first pressing rib 413.

The first pressing rib 413 may protrude from the first housing body 110 and come into contact with the first surface 311 of the fire extinguishing sheet 310.

The first pressing rib 413 according to the illustrated embodiment may protrude from the first housing body 110 toward the space surrounded by the first support body 411. An outer surface of the first pressing rib 413 may come into contact with the first surface 311 of the fire extinguishing sheet 310. The first pressing rib 413 may press the fire extinguishing sheet 310 toward the first fixed rib 412. Accordingly, the first pressing rib 413 may press the second surface 312 of the fire extinguishing sheet 310 against the first fixed rib 412 such that the fire extinguishing sheet 310 is more firmly supported between the first housing body 110 and the first fixed rib 412.

A longitudinal direction of the first pressing rib 413 may be parallel to the longitudinal direction of the first fixed rib 412.

The first pressing rib 413 may be provided as a plurality of first pressing ribs 413. The plurality of first pressing ribs 413 may be arranged at an interval (e.g., a predetermined interval) in the width direction of the first fixed rib 412. The first pressing ribs 413 and the first fixed ribs 412 may be disposed to be offset from each other. In the illustrated embodiment, for example, each of the first pressing ribs 413 may be individually disposed between each pair of neighboring first fixed ribs 412.

The second support member 420 may form the exterior of another side of the support member 400 and support the other side of the fire extinguishing sheet 310.

In the illustrated embodiment, the second support member 420 may extend from the second housing body 120. The second support member 420 may support the other side of a region of the fire extinguishing sheet 310 facing the second housing body 120.

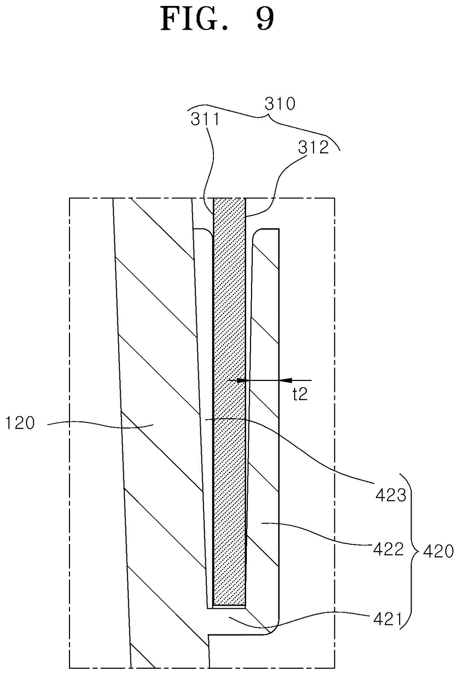

FIG. 9 is an enlarged view schematically showing a configuration of the second support member 420 according to an embodiment of the present disclosure.

Referring to FIGS. 7 and 9, the second support member 420 according to the embodiment may include a second support body 421 and a second fixed rib 422.

The second support body 421 may be disposed to protrude from the second housing body 120 and surround the other side of the fire extinguishing sheet 310.

The second support body 421 according to the illustrated embodiment may have the form of a partition wall protruding from an inner wall surface of the second housing body 120 toward the battery cell 200. In the illustrated embodiment, the second support body 421 may have a "U"-shaped cross-section in which a side thereof is open. The open side of the second support body 421 may be disposed toward the top surface of the first housing body 110. The open side of the first support body 411 and the open side of the second support body 421 may be disposed to face each other.

An inner surface of the second support body 421 may be disposed to surround a peripheral surface of a remaining portion of the fire extinguishing sheet 310 facing the second housing body 120. The inner surface of the second support body 421 may be in contact with the peripheral surface of the fire extinguishing sheet 310 and may be spaced by an interval (e.g., a predetermined interval) apart from the peripheral surface of the fire extinguishing sheet 310.

The second fixed rib 422 may extend from the second support body 421 and come into contact with the second surface 312 of the fire extinguishing sheet 310.

The second fixed rib 422 according to the illustrated embodiment may extend from an end portion of the second support body 421 protruding toward the battery cell 200.

An inner surface of the second fixed rib 422 may be disposed to face a space surrounded by the second support body 421. The inner surface of the second fixed rib 422 may be spaced by an interval (e.g., a predetermined interval) apart from the second housing body 120.

The longitudinal direction of the second fixed rib 422 may intersect the second direction. In an embodiment, for example, the longitudinal direction of the second fixed rib 422 may be parallel to the first direction. In the illustrated embodiment, the longitudinal direction of the second fixed rib 422 may be parallel to the third direction.

Another side of the fire extinguishing sheet 310 facing the second housing body 120 may be inserted between the second housing body 120 and the second fixed rib 422. The inner surface of the second fixed rib 422 facing the second housing body 120 may come into contact with the second surface 312 of the fire extinguishing sheet 310. Accordingly, the second fixed rib 422 may prevent or substantially prevent the fire extinguishing sheet 310 from being detached from the space surrounded by the second support body 421.

The second fixed rib 422 may be provided as a plurality of second fixed ribs 422. The plurality of second fixed ribs 422 may be disposed parallel to each other. The plurality of second fixed ribs 422 may be arranged at a certain (e.g., a set) interval L3 in the width direction of the second fixed ribs 422. In the illustrated embodiment, as the longitudinal direction of the second fixed rib 422 is parallel to the first direction, the width direction of the second fixed rib 422 may be the direction parallel to the third direction.

In the illustrated embodiment, the inner surfaces of the second fixed ribs 422 may individually come into contact with different locations of the second surface 312 of the fire extinguishing sheet 310. In the illustrated embodiment, an area of each of the second fixed ribs 422 may be smaller than the area of the second surface 312 of the fire extinguishing sheet 310. Here, the area of the second fixed rib 422 may be a cross-sectional area of the second fixed rib 422 parallel to the second surface 312. Accordingly, if the battery cell 200 experiences thermal runaway, the fire extinguishing material sprayed by the fire extinguishing member 300 may be easily sprayed through a space between the neighboring second fixed ribs 422.

In the illustrated embodiment, the interval L3 between the neighboring second fixed ribs 422 may be greater than a width L4 of each of the second fixed ribs 422. In the illustrated embodiment, for example, a ratio (L3/L4) of the interval L3 between the neighboring second fixed ribs 422 to the width L4 of the second fixed rib 422 may be 3 to 12. If the ratio (L3/L4) of the interval L3 between the neighboring second fixed ribs 422 to the width L4 of the second fixed rib 422 is less than 3, a size of a region where the fire extinguishing material is sprayed may be excessively reduced, thereby reducing the fire extinguishing efficiency. If the ratio (L3/L4) of the interval L3 between the neighboring second fixed ribs 422 to the width L4 of the second fixed rib 422 is greater than 12, the supporting force for the fire extinguishing sheet 310 may be excessively weakened.

In the illustrated embodiment, a thickness t2 of the second fixed rib 422 in the direction parallel to the second direction may decrease toward an end portion of the second fixed rib 422. For example, the inner surface of the second fixed rib 422 facing the second surface 312 of the fire extinguishing sheet 310 may be disposed at an angle with respect to the second surface 312. The inner surface of the second fixed rib 422 located at the end portion of the second fixed rib 422 may be spaced by an interval (e.g., a predetermined interval) apart from the second surface 312. The inner surface of the second fixed rib 422 located on the side adjacent to the second fixed rib 422 may come into contact with an edge region of the second surface 312. Accordingly, the second fixed rib 422 according to an embodiment may allow the fire extinguishing sheet 310 to be inserted more easily between the second housing body 120 and the second fixed rib 422 in an end region of the second fixed rib 422. In addition, the second fixed rib 422 may firmly support the fire extinguishing sheet 310 by making strong contact with an edge region of the fire extinguishing sheet 310 after the fire extinguishing sheet 310 is completely inserted between the second housing body 120 and the second fixed rib 422.

In the illustrated embodiment, the second support member 420 may further include a second pressing rib 423.

The second pressing rib 423 may protrude from the second housing body 120 and come into contact with the first surface 311 of the fire extinguishing sheet 310.

The second pressing rib 423 according to the illustrated embodiment may protrude from the second housing body 120 toward the space surrounded by the second support body 421. An outer surface of the second pressing rib 423 may come into contact with the first surface 311 of the fire extinguishing sheet 310. The second pressing rib 423 may press the fire extinguishing sheet 310 toward the second fixed rib 422. Accordingly, the second pressing rib 423 may press the second surface 312 of the fire extinguishing sheet 310 against the second fixing rib 422 such that the fire extinguishing sheet 310 is more firmly supported between the second housing body 120 and the second fixing rib 422.

A longitudinal direction of the second pressing rib 423 may be parallel to the longitudinal direction of the second fixed rib 422.

The second pressing rib 423 may be provided as a plurality of second pressing ribs 423. The plurality of second pressing ribs 423 may be arranged at an interval (e.g., a predetermined interval) in the width direction of the second fixed rib 422. The second pressing ribs 423 and the second fixed ribs 422 may be disposed to be offset from each other. In the illustrated embodiment, for example, each of the second pressing ribs 423 may be individually disposed between each pair of neighboring second fixed ribs 422.

Herein, a battery pack according to another embodiment of the present disclosure will be described.

The battery pack according to the present embodiment may be configured to differ in the disposition structure of the battery cell 200, the fire extinguishing sheet 310, and the support member 400 from the battery pack according to the previously described embodiment of the present disclosure.

Accordingly, in describing the battery pack according to the present embodiment, only the disposition structure of the battery cell 200, the fire extinguishing sheet 310, and the support member 400 that is different from the battery pack according to the previously described embodiment of the present disclosure will be described.

For the remaining configuration of the battery pack according to the present embodiment, the description of the battery pack according to the previously described embodiment of the present disclosure can be applied.

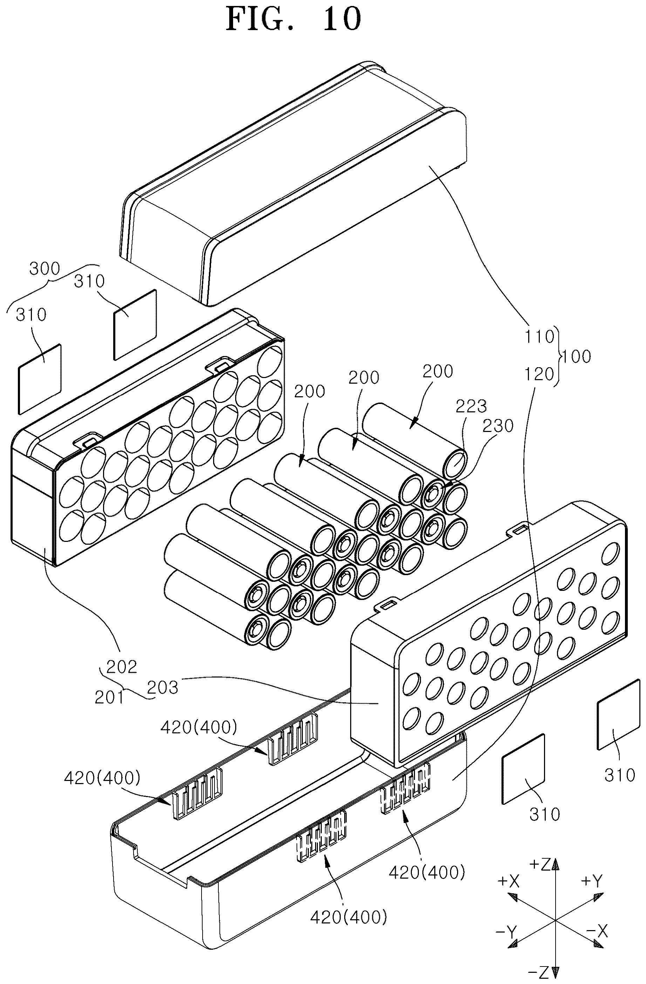

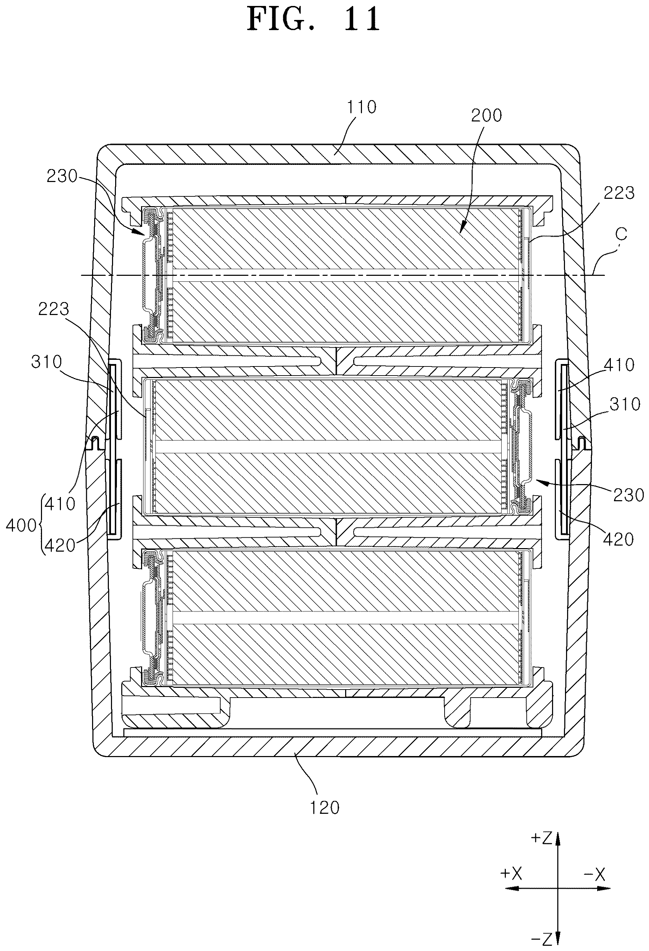

FIG. 10 is an exploded perspective view schematically showing a configuration of a battery pack according to another embodiment of the present disclosure; and FIG. 11 is a cross-sectional view schematically showing the configuration of the battery pack of FIG. 10.

Referring to FIGS. 10 and 11, cap assemblies 230 of some battery cells 200 among a plurality of battery cells 200 according to the present embodiment may be disposed to face the second direction, and the cap assemblies 230 of remaining battery cells 200 among the plurality of battery cells 200 may be disposed to face the direction opposite to the second direction.

A number of the battery cells 200 disposed such that the cap assemblies 230 face the second direction and a number of the battery cells 200 disposed such that the cap assemblies 230 face the direction opposite to the second direction may be the same, or may be different.

An arrangement form of the battery cells 200 disposed such that the cap assemblies 230 face the second direction and the battery cells 200 disposed such that the cap assemblies 230 face the direction opposite to the second direction is not limited to the form shown in FIG. 10 and may be arranged in any of various forms.

In the present embodiment, the fire extinguishing sheet 310 may be formed as at least a plurality of fire extinguishing sheets 310. The plurality of fire extinguishing sheets 310 may be disposed on both, or opposite, sides of the battery cell 200 based on the battery cell 200.

For example, some fire extinguishing sheets 310 among the plurality of fire extinguishing sheets 310 may be disposed between a housing 100 and a first holder 202, and remaining fire extinguishing sheets 310 among the plurality of fire extinguishing sheets 310 may be disposed between the housing 100 and a second holder 203.

The fire extinguishing sheets 310 disposed between the housing 100 and the first holder 202 may be disposed to face the cap assembly 230 disposed to face the second direction. The fire extinguishing sheets 310 disposed between the housing 100 and the second holder 203 may be disposed to face the cap assembly 230 disposed to face the direction opposite to the second direction.

The plurality of fire extinguishing sheets 310 may be disposed in a same number on both, or opposite, sides of the battery cell 200, or may be disposed in different numbers on both, or opposite, sides of the battery cell 200.

The plurality of fire extinguishing sheets 310 may be disposed symmetrically on both, or opposite, sides of the battery cell 200, or may be disposed asymmetrically on both, or opposite, sides of the battery cell 200.

In the illustrated embodiment, the plurality of fire extinguishing sheets 310 are disposed on both, or opposite, sides of the battery cell 200 based on the battery cell 200, and a plurality of support members 400 may also be disposed on both, or opposite, sides of the battery cell 200 and may individually support different fire extinguishing sheets 310.

Herein, a battery pack according to another embodiment of the present disclosure will be described.

The battery pack according to the present embodiment may be configured to differ in the disposition structure of the battery cell 200, the fire extinguishing sheet 310, and the support member 400 from the battery pack according to the embodiment of FIG. 1.

Accordingly, in describing the battery pack according to the present embodiment, only the disposition structure of the battery cell 200, the fire extinguishing sheet 310, and the support member 400 that is different from the battery pack of FIG. 1 will be described.

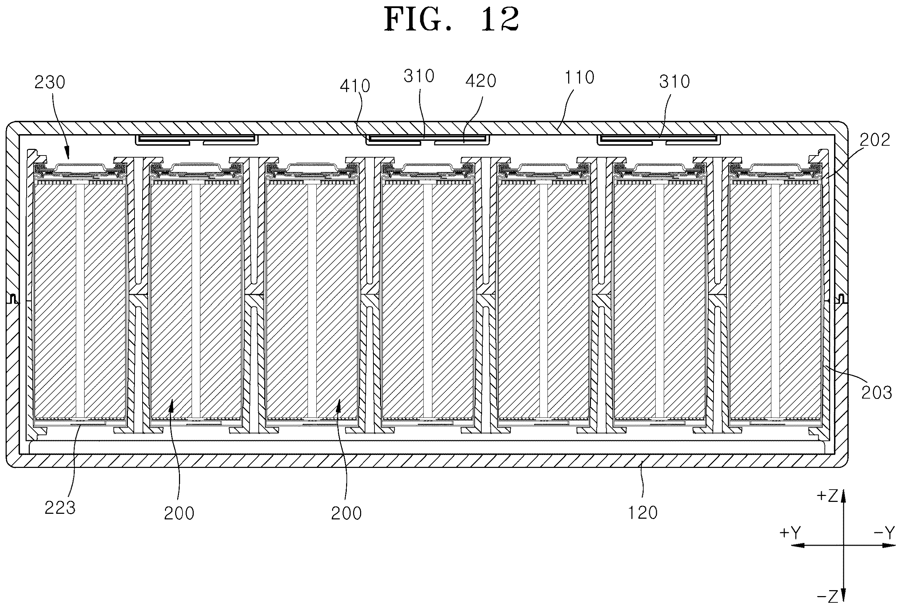

FIG. 12 is a cross-sectional view schematically showing a configuration of the battery pack according to another embodiment of the present disclosure.

Referring to FIG. 12, a winding axis C of the battery cell 200 according to the present embodiment may be disposed parallel to the first direction. Accordingly, a closed portion 223 and a cap assembly 230 of the battery cell 200 may be disposed to face each other in the first direction.

In the present embodiment, the cap assembly 230 of the battery cell 200 may be disposed to face the top surface of the first housing body 110, and the closed portion 223 may be disposed to face the bottom surface of the second housing body 120.

In the present embodiment, the fire extinguishing sheet 310 may be disposed to face the cap assembly 230 of the battery cell 200 in the first direction. For example, the fire extinguishing sheet 310 may be disposed between the top surface of the first housing body 110 and the cap assembly 230 of the battery cell 200. A first surface 311 of the fire extinguishing sheet 310 may be disposed to face the top surface of the first housing body 110, and a second surface 312 of the fire extinguishing sheet 310 may be disposed to face the cap assembly 230 of the battery cell 200.

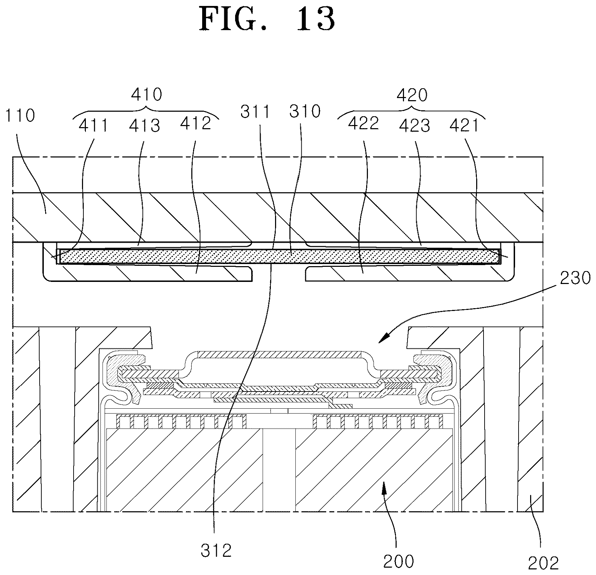

FIG. 13 is an enlarged view schematically showing a configuration of a first support member 410 and a second support member 420 according to another embodiment.

Referring to FIG. 13, both the first support member 410 and the second support member 420 according to the present embodiment may extend from the first housing body 110.

The first support body 411 and the second support body 421 according to the present embodiment may have a form of a partition wall protruding from the top surface of the first housing body 110 toward the battery cell 200. In the embodiment, each of the first support body 411 and the second support body 421 may have a "U"-shaped cross-section in which a side thereof is open. The open sides of the first support body 411 and the second support body 421 may be disposed to face each other. The inner surfaces of the first support body 411 and the second support body 421 may be disposed to surround a peripheral surface on a side and a peripheral surface on another side of the fire extinguishing sheet 310, respectively.

In this case, the first support body 411 and the second support body 421 may be manufactured in a state in which the fire extinguishing sheet 310 is inserted therein, for example, by insert injection molding. Alternatively, a slot into which the fire extinguishing sheet 310 may be inserted in a sliding manner may be formed in the first support body 411 and the second support body 421, or the first support body 411 and the second support body 421 may be configured to be openable and closable so that the fire extinguishing sheet 310 may be easily inserted therein.

A first fixed rib 412 and a second fixed rib 422 may extend from end portions of the first support body 411 and the second support body 421, respectively, and the inner surfaces of the first fixed rib 412 and the second fixed rib 422 may come into contact with a second surface 312 of the fire extinguishing sheet 310.

The longitudinal directions of the first fixed rib 412 and the second fixed rib 422 may be parallel to the third direction. For example, the first fixed rib 412 may extend from an end portion of the first support body 411 in the direction opposite to the third direction, and the second fixed rib 422 may extend from the end portion of the second support body 421 in the third direction.

However, the present disclosure is not limited thereto, and the longitudinal directions of the first fixed rib 412 and the second fixed rib 422 may also be parallel to the second direction.

The first fixed rib 412 and the second fixed rib 422 may be provided as a plurality of first fixed ribs 412 and a plurality of second fixed ribs 422. The plurality of first fixed ribs 412 may be arranged at certain (e.g., set) intervals in the third direction, and the plurality of second fixed ribs 422 may be arranged at certain (e.g., set) intervals in the third direction.

A first pressing rib 413 and a second pressing rib 423 may protrude from the top surface of the first housing body 110 and come into contact with the first surface 311 of the fire extinguishing sheet 310. The first pressing rib 413 and the second pressing rib 423 may press the first surface 311 of the fire extinguishing sheet 310 toward the first fixed rib 412 and the second fixed rib 422, respectively.

Although the cap assembly 230 of the battery cell 200 may be disposed to face the top surface of the first housing body 110 and the closed portion 223 may be disposed to face the bottom surface of the second housing body 120 as an example in the above description, the present disclosure is not limited thereto, and, in other embodiments, the cap assembly 230 of the battery cell 200 may be disposed to face the bottom surface of the second housing body 120, and the closed portion 223 may be disposed to face the top surface of the first housing body 110.

In this case, the fire extinguishing sheet 310 may be disposed between the bottom surface of the second housing body 120 and the battery cell 200, and the first support member 410 and the second support member 420 may be configured to extend from the bottom surface of the second housing body 120.

Herein, a battery pack according to another embodiment of the present disclosure will be described.

The battery pack according to the present embodiment may be configured to differ in the configuration of the battery cell 200 from the battery packs according to the previously described embodiments of the present disclosure.

Accordingly, in describing the battery pack according to the present embodiment, the detailed configuration of the battery cell 200 that is different from the battery packs according to the previously described embodiments of the present disclosure will be described.

For the remaining configuration of the battery pack according to the present embodiment, the description of the battery packs according to the previously described embodiments of the present disclosure can be applied.

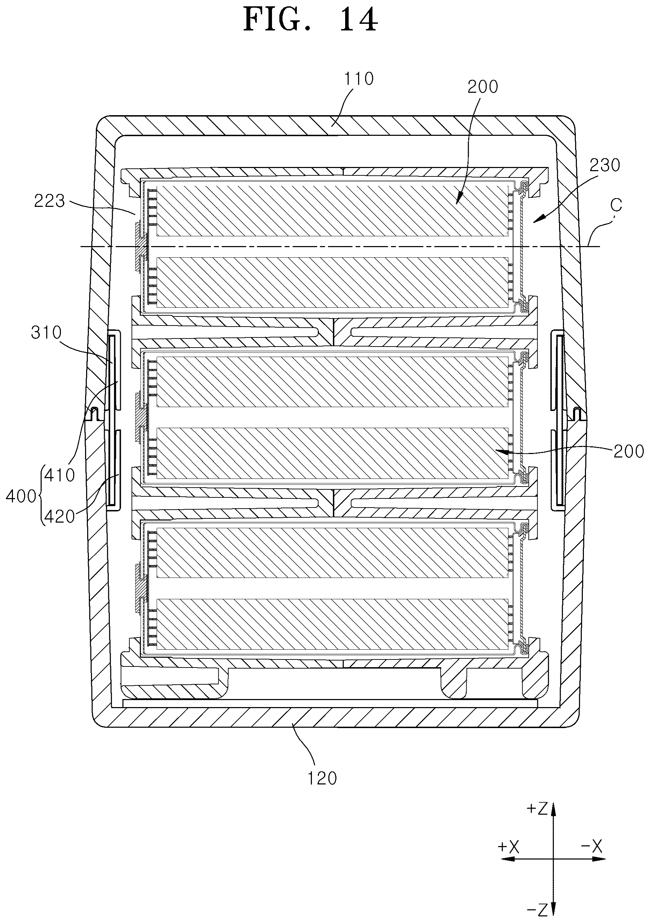

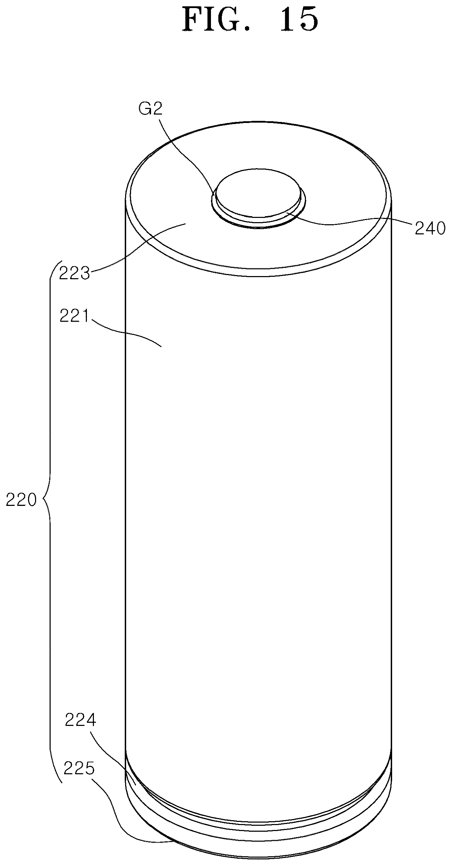

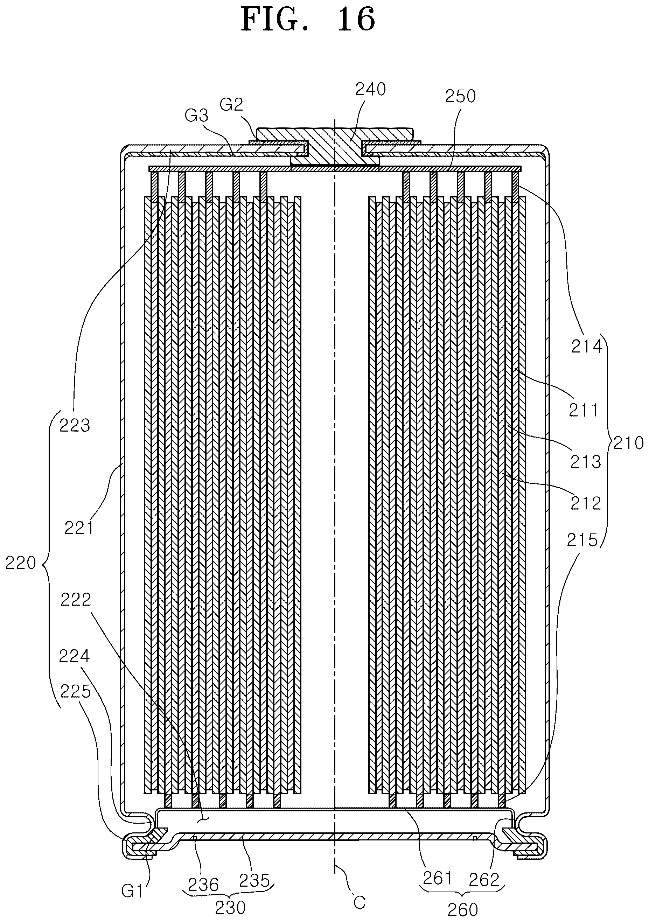

FIG. 14 is a cross-sectional view schematically showing a configuration of the battery pack according to another embodiment of the present disclosure; FIG. 15 is a perspective view schematically showing a configuration of the battery cell according to the illustrated embodiment of the present disclosure shown in FIG. 14; and FIG. 16 is a cross-sectional view schematically showing the configuration of the battery cell 200 of FIG. 15.

Although the battery cell 200 according to the present embodiment is shown in FIG. 14 as an example of being applied to the battery pack according to the embodiment of FIG. 1, the battery cell 200 according to the present embodiment is not limited thereto, and may be configured to be applied to any of the previously described battery packs.

Referring to FIGS. 14 to 16, an electrode assembly 210 and a case 220 according to the present embodiment may be configured the same as the electrode assembly 210 and the case 220 described above with reference to FIGS. 4 and 5.

A first tab 214 according to the present embodiment may be disposed toward a closed portion 223 of the case 220, and a second tab 215 may be disposed toward an opening 222 of the case 220.

The battery cell 200 according to the present embodiment may further include a terminal 240.

The terminal 240 may be coupled to the case 220 and may be electrically connected to the electrode assembly 210. The terminal 240 may be made of a metal material having electrical conductivity, such as, for example, aluminum, nickel, or copper.

The terminal 240 according to the illustrated embodiment may pass through the closed portion 223 of the case 220 along a winding axis C. The terminal 240 may be inserted into the inside of a through hole formed in the central portion of the closed portion 223. An outer circumferential surface of the terminal 240 may be disposed spaced by an interval (e.g., a predetermined interval) apart from an inner circumferential surface of the through hole formed in the central portion of the closed portion 223. Both, or opposite, end portions of the terminal 240 may be disposed in the spaces inside and outside the case 220, respectively.

In the illustrated embodiment, both, or opposite, end portions of the terminal 240 disposed in the spaces inside and outside the case 220 may be compressed and deformed by riveting and may be disposed to face an outer surface and inner surface of the closed portion 223, respectively. Accordingly, an edge region of the terminal 240 may have a generally U-shaped cross-sectional shape. Accordingly, the terminal 240 may be stably fixed to the case 220 while passing through the closed portion 223.

A first current collecting member 250 according to the embodiment may be disposed between the electrode assembly 210 and the closed portion 223.

A surface of the first current collecting member 250 may be in contact with the first tab 214 of the electrode assembly 210 protruding toward the closed portion 223. In the embodiment, the first current collecting member 250 and the first tab 214 may be joined by laser welding.

Another surface of the first current collecting member 250 may come into contact with an end portion surface of the terminal 240 disposed in the internal space of the case 220. In the illustrated embodiment, the first current collecting member 250 and the terminal 240 may be joined by laser welding. Accordingly, in the illustrated embodiment, the terminal 240 may be electrically connected to a first electrode plate 211 and may function as a positive electrode terminal.

A terminal gasket G2 that electrically insulates the terminal 240 and the case 220 may be disposed between the terminal 240 and the case 220.

The terminal gasket G2 according to the illustrated embodiment may be disposed to surround (e.g., entirely surround) the inner circumferential surface of the through hole formed in the closed portion 223 and the outer surface of the closed portion 223 facing both, or opposite, end portions of the terminal 240. Both, or opposite, surfaces of the terminal gasket G2 may be in close contact with the surfaces of the closed portion 223 and the terminal 240. The terminal gasket G2 may be formed of an insulating material, such as rubber, polyethylene (PE), polypropylene (PP), or polyethylene terephthalate (PET).

A case gasket G3 that electrically insulates the electrode assembly 210 and the closed portion 223 may be disposed between the electrode assembly 210 and the closed portion 223. The case gasket G3 may electrically insulate the electrode assembly 210 and the closed portion 223 by blocking direct contact between the case 220 and the first electrode plate 211.

The case gasket G3 according to the illustrated embodiment may be disposed between a surface of the electrode assembly 210 from which the first tab 214 protrudes and the inner surface of the closed portion 223 disposed to face the internal space of the can 221. The case gasket G3 may be fixed to the inner surface of the closed portion 223 using an adhesive or the like. The case gasket G3 may be formed of an insulating material, such as rubber, polyethylene (PE), polypropylene (PP), or polyethylene terephthalate (PET).

The cap assembly 230 according to an embodiment may include a cap plate 235.

The cap plate 235 may be formed to have a generally circular plate shape. The cap plate 235 may be disposed inside the opening 222 of the case 220. The cap plate 235 may be disposed to face the electrode assembly 210 with a beading portion 224 disposed therebetween inside the opening 222. A surface of the cap plate 235 may be seated on the beading portion 224. Another surface of the cap plate 235 may be disposed to face a space outside the case 220.

A crimping portion 225 according to the illustrated embodiment may be bent from the beading portion 224 and may be disposed to face the other surface of the cap plate 235 that is disposed toward the space outside the case 220.

A cap gasket G1 that electrically insulates the cap plate 235 and the case 220 may be disposed between the cap plate 235 and the crimping portion 225.

The cap gasket G1 according to the illustrated embodiment may be disposed to surround (e.g., entirely surround) an end portion of the cap plate 235. In the illustrated embodiment, an outer surface of the cap gasket G1 may be press-fitted to inner surfaces of the beading portion 224 and the crimping portion 225. The cap gasket G1 may be formed of an insulating material, such as rubber, polyethylene (PE), polypropylene (PP), or polyethylene terephthalate (PET). Accordingly, the cap gasket G1 may electrically insulate the cap plate 235 and the case 220 and may prevent or substantially prevent moisture, foreign substances, or the like from entering between the cap plate 235 and the case 220.

In the illustrated embodiment, a notch 236 that induces a fracture operation of the cap plate 235 may be formed in the cap plate 235 if the internal pressure of the case 220 increases due to thermal runaway or the like of the battery cell 200.

The notch 236 according to the illustrated embodiment may have a shape of a groove that is concavely formed from a surface of the cap plate 235 toward the inside of the cap plate 235. That is, the notch 236 may extend concavely inward from a surface of the cap plate 235. In the illustrated embodiment, the notch 236 may have a ring shape extending in the circumferential direction centered on the winding axis C.

A second current collecting member 260 according to the illustrated embodiment may include a flat surface portion 261 located between the second tab 215 and the cap plate 235, and an extension portion 262 extending from the flat surface portion 261.

A surface of the flat surface portion 261 facing the electrode assembly 210 may be connected to the second tab 215. An end portion of the second tab 215 may be in contact with the flat surface portion 261 and may be connected to a surface of the flat surface portion 261 by laser welding or the like.

The extension portion 262 may extend from an edge of the flat surface portion 261 toward the cap plate 235. The extension portion 262 may be in contact with the inner surface of the beading portion 224. The extension portion 262 may be rounded or bent along the beading portion 224. The extension portion 262 may be connected to the beading portion 224 by welding or the like. Accordingly, the case 220 and the second electrode plate 212 may be electrically connected, and the closed portion 223 may function as a negative electrode terminal.

The extension portion 262 may be provided as a plurality of extension portions 262. The plurality of extension portions 262 may be disposed spaced apart from each other along the edge of the flat surface portion 261.

According to embodiments of the present disclosure, if a battery cell experiences thermal runaway, chain ignition of battery cells can be prevented or substantially prevented by quickly extinguishing flames generated from the battery cell by a fire extinguishing member.

According to embodiments of the present disclosure, stable and consistent extinguishing performance can be ensured by stably supporting the fire extinguishing member by a support member regardless of an arrangement direction of the battery cell.

However, aspects and technical effects acquirable through the present disclosure are not limited to the above-described aspects and technical effects, and other aspects and technical effects which are not mentioned will be clearly understood by those skilled in the art from the description of the invention described above.

Although the present disclosure has been described with reference to the embodiments shown in the drawings, these embodiments are provided as examples, and it is to be understood by those skilled in the art that various modifications and equivalents are possible.

The present disclosure has been described with reference to some embodiments illustrated in the drawings, which are merely examples, and those having ordinary skill in the art will understand that various modifications and equivalent other embodiments are possible.

## Claims

1. A battery pack comprising:
a housing;
a plurality of battery cells accommodated in the housing;
a fire extinguishing member facing the battery cells; and
a support member extending from the housing and configured to support the fire extinguishing member.

2. The battery pack as claimed in claim 1, wherein each of the plurality of battery cells comprises:
an electrode assembly;
a case accommodating the electrode assembly and comprising an opening and a closed portion; and
a cap assembly facing the closed portion and sealing the opening, and
the fire extinguishing member comprises a fire extinguishing sheet comprising a first surface facing the housing and a second surface facing the cap assembly.

3. The battery pack as claimed in claim 2, wherein an area of the fire extinguishing sheet is greater than a cross-sectional area of a battery cell of the plurality of battery cells.

4. The battery pack as claimed in claim 2 or 3, wherein the support member comprises:
a first support member configured to support a first side of the fire extinguishing sheet; and
a second support member spaced apart from the first support member and configured to support a second side of the fire extinguishing sheet.

5. The battery pack as claimed in claim 2, 3 or 4, wherein the housing comprises a first housing body and a second housing body facing each other in a first direction, and
the closed portion and the cap assembly face each other in a second direction intersecting the first direction.

6. The battery pack as claimed in claim 5, wherein the cap assembly faces the second direction.

7. The battery pack as claimed in claim 5, wherein the cap assemblies of some battery cells among the plurality of battery cells face the second direction, and the cap assemblies of remaining battery cells among the plurality of battery cells face a direction opposite to the second direction.

8. The battery pack as claimed in claim 5, 6 or 7, wherein the first support member extends from the first housing body, and the second support member extends from the second housing body.

9. The battery pack as claimed in claim 8, wherein the first support member comprises:
a first support body protruding from the first housing body and surrounding a side of the fire extinguishing sheet; and
a plurality of first fixed ribs that each extend from the first support body and contact the second surface of the fire extinguishing sheet.

10. The battery pack as claimed in claim 9, wherein a side of the fire extinguishing sheet is inserted between the first housing body and a first fixed rib of the plurality of first fixed ribs.

11. The battery pack as claimed in claim 9 or 10, wherein an area of each of the first fixed ribs is smaller than an area of the second surface.

12. The battery pack as claimed in claim 9, 10 or 11, wherein an interval between neighboring first fixed ribs of the plurality of first fixed ribs is greater than a width of each of the first fixed ribs.

13. The battery pack as claimed in any one of claims 5 to 12, wherein the first support member further comprises a plurality of first pressing ribs that protrude from the first housing body and contact the first surface of the fire extinguishing sheet.

14. The battery pack as claimed in any one of claims 8 to 13, wherein the second support member comprises:
a second support body protruding from the second housing body and surrounding another side of the fire extinguishing sheet; and
a plurality of second fixed ribs that each extend from the second support body and contact the second surface of the fire extinguishing sheet.

15. The battery pack as claimed in claim 4, wherein the housing comprises a first housing body and a second housing body facing each other in a first direction, and
the closed portion and the cap assembly face each other in the first direction.
